# EUROPÄISCHE PATENTSCHRIFT

(11) **EP 1 332 065 B1**
(45) Veröffentlichungstag und Bekanntmachung des Hinweises auf die Patenterteilung: **27.12.2006**
(21) Anmeldenummer: 01993371.2
(22) Anmeldetag: 27.10.2001
(51) Int. Cl.: B60K 15/077

(54) **KRAFTSTOFFTANK**
FUEL TANK
RESERVOIR DE CARBURANT

(30) Priorität: 08.11.2000 DE 10055355
(43) Veröffentlichungstag der Anmeldung: 06.08.2003
(73) Patentinhaber: Kautex Textron GmbH & Co. KG., 53229 Bonn (DE)
(72) Erfinder: VIEBAHN, Reiner, 56566 Neuwied (DE); BOLLE, Dirk, 53229 Bonn (DE); HOMBURG, Torsten, 6872 Salorino (CH)
(74) Vertreter: Kierdorf, Theodor
(86) Internationale Anmeldenummer: PCT/DE2001/004076
(87) Internationale Veröffentlichungsnummer: WO 2002/038409

(56) Entgegenhaltungen:
- EP-A- 0 997 336
- DE-A- 4 400 919
- DE-A- 19 846 059

## Beschreibung

Die Erfindung betrifft einen Kraftstofftank für ein Kfz, bei welchem wenigstens zwei Tankbereiche mit größerem Querschnitt jeweils kommunizierende Teilvolumina des Tanks bildend über einen Tankbereich kleineren Querschnitts miteinander verbunden sind, wobei der Tankbereich kleineren Querschnitts in Einbaulage des Tanks eine untere Einziehung desselben bildet, mit wenigstens einer in einem ersten Tankbereich vorgesehenen Kraftstoffördereinheit und mit Mitteln zur Entlüfung des Tanks, wobei wenigstens eine Ausgleichsleitung vorgesehen ist, die die Teilvolumina der Tankbereiche größeren Querschnitts nach dem Prinzip der kommunizierenden Röhren miteinander verbindet und wobei Mittel zur Entlüftung der Ausgleichsleitung vorgesehen sind.

Derartige Kraftstofftanks werden gemeinhin als Satteltanks bezeichnet. Solche Kraftstofftanks finden hauptsächlich bei heckangetriebenen Kraftfahrzeugen Anwendung, wo diese über Antriebsbauteile, beispielsweise der Kardanwelle, oder Auspuffrohrteilen des Fahrzeugs angeordnet sind. Hierzu weist der Kraftstofftank im Bodenbereich Vertiefungen oder Einziehungen auf, die den Tank in der Regel in zwei Tankbereiche größeren Querschnitts bzw. in zwei Tankkammern unterteilen. Diese Tankkammern weisen aus baulichen oder sicherheitsrelevanten Gründen keine tieferliegenden Verbindungsleitungen auf. In der Regel ist in einer der beiden Tankbereiche größeren Querschnitts eine Kraftstofffördereinheit bestehend aus einer in einem Reservoir angeordneten Elektrokraftstoffpumpe vorgesehen. Das Reservoir, welches auch als Schwalltopf oder Schlingertopf bezeichnet wird, stellt sicher, dass die Kraftstoffpumpe bei allen möglichen Fahrzuständen des Kraftfahrzeugs mit Kraftstoff versorgt ist. Da somit nur aus einem Teilbereich des Kraftstofftanks Kraftstoff zum Motor gefördert wird, muss sichergestellt werden, dass der in den anderen Teilbereichen des Kraftstofftanks vorhandene Kraftstoff ebenfalls der Kraftstoffpumpe zugeführt wird. In der Regel wird dies mittels einer oder mehrerer Saugstrahlpumpen bewerkstelligt, die über einen von dem Kraftstoffförderstrom abgezweigten Teilstrom oder von einem Kraftstoffrücklauf vom Motor angetrieben werden. Solche Saugstrahlpumpen, bei denen ein Kraftstoffstrahl, auch Treibstrahl genannt, in einer Leitungsverzweigung einen Fördersog erzeugt, sind hinlänglich bekannt, beispielsweise aus der DE 39 40 060 C2. Über ein oder mehrere Saugstrahlpumpen wird also ständig Kraftstoff auf anderen Niveaus oder anderen Teilvolumina des Kraftstofftanks dem Reservoir der Fördereinheit zugeführt, so dass bei der Entleerung des Kraftstofftanks sichergestellt ist, dass kein ungenutzter Kraftstoff in Teilvolumina des Kraftstofftanks verbleibt.

Bei Schrägstellung des Kraftfahrzeugs oder bei verschiedenen Beschleunigungszuständen, insbesondere bei Querbeschleunigung des Fahrzeugs in Kurven, ist bedingt durch die Konstruktion eines solchen Satteltanks, bei dem die Einziehung des Tankbodens eine sattelförmige Erhebung im Tankinneren bildet, nicht ausgeschlossen, dass Kraftstoff von einer Tankkammer in die andere Tankkammer so überläuft, dass sich unterschiedliche Füllstandsniveaus in den Tankkammern ergeben. Solche Niveauunterschiede sind in der Regel in Hinblick auf eine ausreichende Kraftstoffversorgung der Kraftstoffpumpe bei Betrieb des Kraftfahrzeuges unkritisch, gleichwohl wäre es wünschenswert, wenn das Füllstandsniveau in demjenigen Tankbereich, in welchem die Kraftstoffpumpe angeordnet ist, höher wäre als in dem zumeinst quer zur Fahrzeuglängsachse gegenüberliegenden Tankbereich.

Niveauunterschiede zwischen den beiden Kammern des Tanks können allerdings bei der Betankung des Kraftfahrzeugs zu Problemen führen, insbesondere dann, wenn in einer Kammer des Tanks ein Füllstand erreicht wird, bei welchem ein dort vorgesehenes Betankungsentlüftungsventil anspricht, obwohl in der jeweils anderen Kammer des Tanks noch nicht der maximale Füllstand erreicht ist. Dann schaltet das Zapfventil bei der Betankung vorzeitig ab, mit der Folge, dass der Tank nicht vollständig befüllt werden kann. Dieses Problem ist insbesondere dann gegeben, wenn der zwischen den Tankbereichen größeren Querschnitts vorgesehene Sattel im Tank besonders ausgeprägt ist und das durch ein Betankungsentlüftungsventil vorgegebene Abschaltniveau in wenigstens einer Tankkammer sich unterhalb dieser Sattelfläche befindet, so dass ein Niveauausgleich in den Kammern aufgrund Überlaufens einer Kammer erst nach Ansprechen des Betankungsentlüftungsventils stattfinden könnte.

Dies könnte dadurch vermieden werden, dass in jeder Kammer des Tanks ein Betankungsentlüfungsventil vorgesehen ist, so dass eine Abschaltung des Zapfventils nur dann erfolgt, wenn beide Betankungsentlüftungsventile ansprechen. Dies hat den Nachteil, dass in dem Fall, bei welchem zunächst das Betankungsentlüftungsventil in derjenigen Kammer anspricht, in die nicht der Einfüllstutzen des Tanks mündet, die Möglichkeit besteht, daß die betreffende Kammer des Tanks überfüllt wird, so dass in dem Tank nicht mehr hinreichend Ausdehnungsvolumen für Kraftstoff vorhanden ist. Derjenige Fall, bei dem das Betankungsentlüftungsventil in der Kammer mit dem Einfüllstutzen zuerst anspricht, ist unkritisch, denn der Kraftstoff kann aus dieser Kammer in die andere Kammer überlaufen. Es ist also bei einer solchen Lösung nicht immer gewährleistet, dass bei gleichem Füllstand in den Kammern eine Abschaltung des Zapfventils erfolgt.

Zur Egalisierung des Füllstandsniveaus in verschiedenen Kammern eines Tanksystems wird beispielsweise in der EP 0 228 176 vorgeschlagen, verschiedene Kammern eines Tanks über eine Ausgleichsleitung nach dem Prinzip der kommunizierenden Röhren miteinander zu verbinden. Dort geht es allerdings darum, sowohl bei Stillstand als auch bei Betrieb des Kfz ein gleiches Füllstandniveau der verschiedenen Tankvolumina zu gewährleisten, was, wie vorstehend erwähnt, nicht immer wünschenswert ist.

Eine vergleichbare Anordnung zur Egalisierung des Niveaus verschiedener Teilvolumina des Tanks ist aus der DE 44 00 919 A1. bekannt. Die DE 44 00 919 A1 beschreibt einen Satteltank gemäß Oberbegriff der Ansprüche 1 und 2, bei welchem ebenfalls ein Niveauausgleich der beiden Kammern des Satteltanks mit einer als Saugheber ausgebildeten Ausgleichsleitung vorgesehen ist. Die Ausgleichsleitung ist über einen Abzweig mit einer vakuumkammer einer Strahlpumpe bzw. mit einer Saugstrahlpumpe verbunden, die über den Kraftstoffrücklauf vom Motor betrieben wird. Hierdurch wird sichergestellt, dass evtl. in der Ausgleichsleitung angesammeltes Gas oder Luft aus dieser entfernt wird, so dass ein Niveauausgleich der Tankkammern unabhängig von einer dabei erfolgten Brennstoffabsaugung aus der Ausgleichsleitung erfolgen kann.

Diese Lösung ist insoweit nachteilhaft, als dass ein gleicher Füllstand in den Tankkammern nur dann gewährleistet ist, wenn das Kraftfahrzeug keine Querneigung aufweist. Bei Querneigung des Kraftfahrzeugs bei Betankung ist nach wie vor nicht sichergestellt, dass eine Abschaltung des Zapfventils bei gleichem Füllstand in den Kammern erfolgt. Darüber hinaus hat eine solche Lösung nicht nur Nachteile bei der Betankung, vielmehr besteht auch bei abgestelltem Fahrzeug mit Querneigung, insbesondere bei niedrigem Füllstand in dem Tank die Gefahr, dass der Kraftstoff von derjenigen Kammer, in der sich die Kraftstoffpumpe befindet, in die jeweils andere Kammer läuft, so dass die Kraftstoffpumpe unter Umständen nicht hinreichend mit Kraftstoff versorgt ist.

Aus der DE 198 46 059 ist eine Kraftstoffversorgungsanlage für Automobile mit einem Kraftstoffbehälter bekannt, an den ein Einfüllrohr sowie eine Betriebsentlüftung und eine Betankungsentlüftung angeschlossen sind. Die Betriebsentlüftung und die Betankungsentlüftung sind Bestandteil einer Mehrkanalleitung. Deshalb ist für den Anschluss der Betriebsentlüftungsleitung, der Betankungsentlüftungsleitung und des Einfüllrohrs nur eine Öffnung im Kraftstoffbehälter erforderlich.

Der Erfindung liegt daher die Aufgabe zugrunde, einen Kraftstofftank der eingangs genannten Art mit verhältnismäßig einfachen konstruktiven Mitteln derart auszugestalten, dass eine vorzeitige Abschaltung bei der Betankung als auch eine Überfüllung einer der Kammern zuverlässig vermieden wird. Darüber hinaus soll eine hinreichende Befüllung derjenigen Kammer gewährleistet sein, in der die Kraftstoffpumpe angeordnet ist.

Die Aufgabe wird mit den Merkmalen der nebengeordneten Ansprüche 1 oder 2 gelöst, vorteilhafte Ausgestaltungen der Erfindung sind aus den Unteransprüchen entnehmbar.

Mit dem Kraftstofftank gemäß der Erfindung ist sichergestellt, dass insbesondere bei Stillstand des Motors ein Niveauausgleich zwischen den Tankbereichen größeren Querschnitts - nachstehend der Einfachheit halber als Kammern bezeichnet - derart stattfinden kann, dass Kraftstoff von der zweiten Kammer in die erste Kammer strömt, dass aber zumindest bei Unterschreiten eines bestimmten Füllstandsniveaus kein Kraftstoff von der ersten Kammer in die zweite Kammer zurückströmen kann. Dies hat einerseits den Vorzug, dass ein gewisser Mindestfüllstand in der ersten Kammer gewährleistet ist, andererseits dass eine Abschaltung bei der Betankung bei etwa gleichem Füllstandsniveau in den Kammern stattfindet.

Es ist für den Fachmann ersichtlich, dass das Problem, von welchem die Erfindung ausgeht, insbesondere dann gegeben ist, wenn der Sattel des Tankbodens besonders ausgeprägt ist, in diesem Fall bildet der Tankbereich kleineren Querschnitts ein besonders kleines Teilvolumen, so dass ein Niveauausgleich in den Kammern aufgrund Überlaufens einer Kammer erst verhältnismäßig spät stattfinden kann, gegebenenfalls nach Ansprechen des Betankungsentlüftungsventils.

Bei dem Kraftstoffbehälter gemäß der Erfindung ist vorgesehen, dass die Ausgleichsleitung mit einem ersten Ende in den ersten Tankbereich auf einem höheren Niveau mündet als in dem zweiten Tankbereich größeren Querschnitts, so dass eine Rücklaufsperre von der ersten Kammer in die zweite Kammer erst bei Unterschreiten eines bestimmten Füllstandsniveaus gegeben ist.

Es ist vorgesehen, dass die Ausgleichsleitung über einen Abzweig an eine Unterdruckleitung angeschlossen ist, vorzugsweise in der Einbaulage des Kraftstofftanks an deren höchster Stelle, so dass evtl. sich in der Ausgleichsleitung angesammelte Gase aus dieser abgezogen werden. Dabei soll die hierbei geförderte Kraftstoffmenge verhältnismäßig klein sein, der Querschnitt der Ausgleichsleitung ist dabei zweckmäßigerweise so gewählt, dass dieser als Saugheber funktioniert, auch wenn keine Unterdruckbeaufschlagung vorhanden ist, beispielsweise bei stehendem Motor.

Die Unterdruckleitung kann beispielsweise an eine Pumpe angeschlossen sein, die über einen aus dem Kraftstoffförderstrom oder aus einem Kraftstoffrücklauf abgezweigten Kraftstoffteilstrom betrieben wird.

Es ist für den Fachmann ersichtlich, dass alternativ auch eine separate elektrische Pumpe zur Entlüftung der Ausgleichsleitung vorgesehen sein kann. Beispielsweise kann die Entlüftung über eine zweite Pumpenstufe der Kraftstoffförderpumpe bewerkstelligt werden. Der erstgenannten Lösung ist jedoch gegenüber dieser Lösung der Vorzug zu geben, da solche Pumpen, die nicht als Strahlpumpen ausgebildet sind, einen schlechten Wirkungsgrad bei Förderung von Gasen haben.

Zweckmäßigerweise ist in der Unterdruckleitung wenigstens ein Rückschlagventil vorgesehen, so dass sichergestellt ist, dass die Ausgleichsleitung bei Motorstillstand nicht leerläuft.

Die Erfindung wird nachstehend anhand eines in den Zeichnungen dargestellten Ausführungsbeispiels erläutert.

Es zeigen:
- Fig. 1: eine schematische Ansicht eines Kraftstofftanks gemäß der Erfindung bei der Betankung,
- Fig. 2: den in Fig. 1 dargestellten Kraftstofftank während des Betriebs des Kfz,
- Fig. 3 und 4: zwei Füllstände des erfindungsgemäßen Kraftstofftanks unmittelbar vor der Betankung in chronologischer Reihenfolge.

Der in den Figuren vereinfacht dargestellte Kraftstofftank 1 ist als Satteltank mit zwei Tankbereichen größeren Querschnitts, die jeweils eine erste Kammer 2 und eine zweite Kammer 3 bilden, ausgebildet. Die erste und die zweite Kammer 2, 3 sind miteiannder kommunizierend über einen Tankbereich 4 geringeren Querschnitts verbunden. Der mit 5 bezeichnete Boden des Kraftstofftanks 1 ist einen Sattel 6 bildend zwischen der ersten Kammer 2 und der zweiten Kammer 3 eingezogen.

Der Kraftstofftank 1 ist weiterhin mit einem Einfüllrohr 7 versehen, das in die erste Kammer 2 mündet. Dort ist eine mit 8 bezeichnete Kraftstofffördereinheit, umfassend eine nicht näher dargestellte Kraftstoffpumpe und ein die Kraftstoffpumpe umgebendes Reservoir 9 als Schwalltopf angeordnet. Das Reservoir 9 stellt in bekannter Art und Weise die Kraftstoffversorgung der von diesem eingeschlossenen Kraftstoffpumpe sicher.

Die erste und zweite Kammer 2, 3 sind untereinander über eine Ausgleichsleitung 10 nach dem Prinzip der kommunizierenden Röhren miteinander verbunden. Solang der Querschnitt der Ausgleichsleitung 10 vollständig mit Kraftstoff befüllt ist, wirkt diese als Saugheber und bewirt einen Niveauausgleich zwischen den beiden Kammern 2, 3, wobei der Querschnitt der Ausgleichsleitung 10 so bemessen ist, dass dieser Niveauausgleich binnen kurzer Zeit vollziehbar ist.

Die Ausgleichsleitung 10 ist im Bereich des Sattels 6 des Kraftstofftanks 1 in Einbaulage desselben an deren höchstgelegener Stelle an eine Unterdruckleitung 11 angeschlossen, die einen Abzweig der Ausgleichsleitung 10 bildet. Die Unterdruckleitung 11 wiederum ist an die Vakuumkammer einer nur schematisch dargestellten Saugstrahlpumpe 12 angeschlossen, die über einen mit 13 bezeichneten Kraftstoffrücklauf von dem nicht dargestellten Motor des Kfz betrieben wird. In bekannter Art und Weise wird der durch den Rücklauf 13 geführte Kraftstoff durch eine eine Venturidüse bildende Verengung der Saugstrahlpumpe gefördert. Im Bereich etwa des engsten Querschnitts der Venturidüse ist die Unterdruckleitung 11 entweder unmittelbar an den Strömungsquerschnitt der Venturidüse oder an eine in diesen mündende Unterdruckkammer angeschlossen, so dass der vom Motor zurückgeführte Kraftstoff bei Betrieb des Kfz eine ständige Sogbeaufschlagung der Unterdruckleitung 11 bewirkt. Es gibt vielfältige Möglichkeiten, derartige Strahlpumpen auszuführen. Einzelheiten hierzu sind beispielsweise in der EP 0 228 176 oder auch in der DE 44 00 919 offenbart.

Im Falle eines rücklauflosen Kraftstofffördersystems böte sich an, die Ausgleichsleitung 10 an den mit 14 bezeichneten Vorlauf des Kraftstoffförderstroms zum Motor in der zuvor beschriebenen Art und Weise anzuschließen.

Schließlich ist es alternativ möglich, die Ausgleichsleitung 10 an eine ohnehin vorhandene Saugstrahlpumpe anzuschließen, die bei Betrieb des Kfz ständig Kraftstoff von der zweiten Kammer 3 in die erste Kammer 2 des Kraftstofftanks 1 fördert. Eine solche Saugstrahlpumpe ist ohnehin bei der beschriebenen Anordnung gemäß der Erfindung nicht entbehrlich, denn die bei Betrieb des Kfz über die Unterdruckleitung 11 gezogene Kraftstoffmenge soll nur ausreichend groß sein, um evtl. Gasansammlungen in der Ausgleichsleitung 10 abzuführen.

Um bei Stillstand des Motors zu gewährleisten, dass sich die Ausgleichsleitung 10 nicht entleert, ist in dieser ein Rückschlagventil 15 vorgesehen.

Wie aus den Figuren ersichtlich ist, mündet die Ausgleichsleitung 10 in der ersten Kammer 2 des Kraftstofftanks 1 auf einem höheren Niveau als in der zweiten Kammer 3, so dass ein Niveaugefälle des Füllstands von der ersten Kammer 2 zur zweiten Kammer 3 nur bei einem Füllstand in der ersten Kammer 2 stattfinden kann, der das erste Ende 16 der Ausgleichsleitung 10 überschreitet.

Mit 17 ist ein Betankungsentlüftungsventil in der zweiten Kammer 3 des Kraftstofftanks 1 bezeichnet; ein solches Ventil ist in der ersten Kammer 2 nicht vorgesehen. Das Betankungsentlüftungsventil wird bei Überschreiten eines maximalen Füllstandes in der zweiten Kammer 3 angesprochen, derart, dass dieses schließt, so dass sich in dem Kraftstofftank 1 ein Staudruck aufbaut, der schließlich bei der Betankung ein Abschalten des Zapfventils bewirkt. Es sei an dieser Stelle nochmals ausdrücklich darauf hingewiesen, dass das Betankungsentlüftungsventil 17 bei dem beschriebenen Ausführungsbeispiel so ausgelegt ist, dass das mit gestrichelten Linien in den Figuren angedeutete Abschaltniveau des Tanks sich in beiden Kammern geringfügig unterhalb des Sattels 6 befindet. Es ist für den Fachmann selbstverständlich, dass die über das Betankungsentlüftungsventil 17 abgeführten Kraftstoffdämpfe einem Kraftstoffdampffilter zugeführt werden.

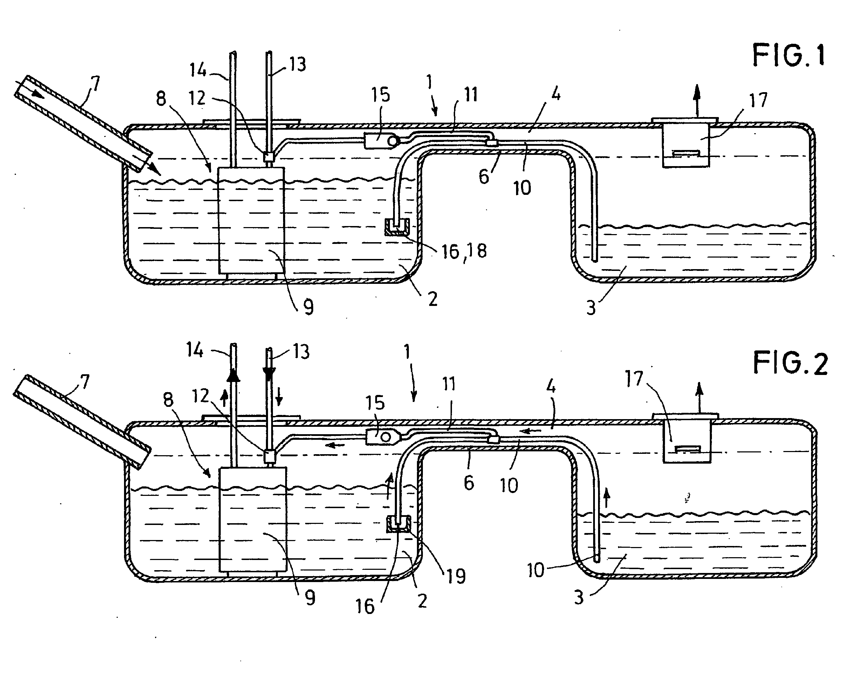

Fig. 1 zeigt den Kraftstofftank 1 gemäß der Erfindung bei der Betankung in einem Zustand, in dem das Füllstandsniveau in der ersten Kammer 2 höher als in der zweiten Kammer 2 ist. Dabei erfolgt ein Überströmen des Kraftstoffs von der ersten Kammer 2 in die zweite Kammer 3 zunächst über die Ausgleichsleitung 10 wenn der Füllstand, wie in Fig. 1 gezeigt, das erste Ende 16 der Ausgleichsleitung 10 überschreitet. Je nach Bemessung der Ausgleichsleitung 10 und je nach Betankungsgeschwindigkeit wird gegebenenfalls zusätzlich der Sattel 6 des Bodens 5 des Kraftstofftanks auch überströmt. Die Betankung des Kraftstofftanks 1 ist solange möglich, bis der Füllstand in der zweiten Kammer 3 die gestrichelt eingezeichnete Abschalthöhe des Betankungsentlüftungsventils 17 erreicht hat. Dann baut sich im Kraftstofftank 1 ein Überdruck auf, der ein Abschalten des Zapfventils bewirkt. Fig. 2 zeigt schematisch den in Fig. 1 dargestellten Kraftstofftank 1 beim Betrieb des Kfz. Der Kraftstoff wird in der ersten Kammer 2 von der in der Kraftstofffördereinheit 8 angeordneten Kraftstoffpumpe zum Motor geführt. Der über den Rücklauf 13 geführte Kraftstoff bewirkt über die Unterdruckleitung 11 eine ständige Kraftstoffdurchspülung der Ausgleichsleitung 10, der hierbei in geringen Mengen geförderte Kraftstoffstrom wird dem Rücklauf 13, der in das Reservoir 9 mündet, zugeführt. Bei dem in Fig. 2 dargestellten Zustand ist ein weiteres Rückschlagventil 18 in dem ersten Ende 16 der Ausgleichsleitung 10 vorgesehen. Der Füllstand in der ersten Kammer 2 befindet sich oberhalb des Niveaus des Füllstands in der zweiten Kammer 3. Über eine nicht dargestellte Saugstrahlleitung wird beim Betrieb des Kfz ständig Kraftstoff aus der zweiten Kammer 3 der ersten Kammer 1 oder unmittelbar dem Reservoir 9 zugeführt.

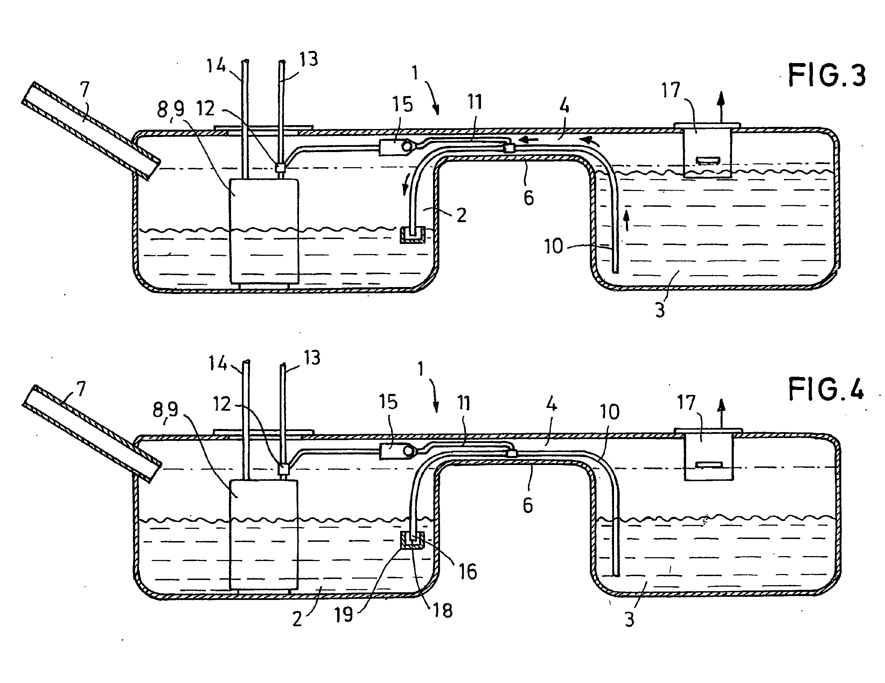

Unmittelbar vor der Betankung ist eine größere Kraftstoffmenge aufgrund von Querbeschleunigung des Kraftfahrzeugs in die zweite Kammer 3 gelangt, so dass nun der in Fig. 3 dargestellte Zustand erreicht ist, bei dem das Kraftstoffniveau in der zweiten Kammer 3 das Kraftstoffniveau in der ersten Kammer 1 überschreitet. Folglich ist das Betankungsentlüftungsventil 17 geschlossen, so dass zunächst eine Betankung des Kraftstofftanks 1 nicht möglich wäre. In diesem Zustand ist auch das Rückschlagventil 15 in der Unterdruckleitung 11 geschlossen, so dass in dem Fall, bei welchem das erste Ende 16 der Ausgleichsleitung 10 nicht mehr in den Kraftstoffspiegel eingetaucht sein sollte, die Ausgleichsleitung nicht leerlaufen kann. Die Ausgleichsleitung wird dann innerhalb von kurzer Zeit einen Niveauausgleich bei Niveaugefälle von der zweiten Kammer 3 zur ersten Kammer 1 herstellen, so dass das Betankungsentlüftungsventil wieder freigegeben ist, wie dies in Fig. 3 schließlich dargestellt ist.

An dieser Stelle sei erwähnt, dass es nicht unbedingt erforderlich ist, in dem ersten Ende 16 der Ausgleichsleitung 10 ein Rückschlagventil vorzusehen. In diesem Falle wird es sich auch bei dem in Fig. 2 gezeigten Zustand ein Niveauausgleich bei einem Gefälle von der ersten Kammer 2 zur zweiten Kammer 3 einstellen, vorausgesetzt, der Flüssigkeitspiegel in der ersten Kammer 2 unterschreitet nicht das Niveau des ersten Endes 16 der Ausgleichsleitung.

Mit 19 ist ein Überlaufbehälter bezeichnet, in den das erste Ende 16 der Ausgleichsleitung 10 eingetaucht ist, dieser stellt sicher, daß letzteres bei Schlingerbewegungen des Fahrzeugs in den Kraftstoffspiegel eingetaucht bleibt.

### Bezugszeichenliste

- 1: Kraftstofftank
- 2: erste Kammer
- 3: zweite Kammer
- 4: Tankbereich geringeren Querschnitts
- 5: Boden
- 6: Sattel
- 7: Einfüllrohr
- 8: Kraftstofffördereinheit
- 9: Reservoir
- 10: Ausgleichsleitung
- 11: Unterdruckleitung
- 12: Saugstrahlpumpe
- 13: Rücklauf
- 14: Vorlauf
- 15: Rückschlagventil
- 16: erstes Ende der Ausgleichsleitung
- 17: Betankungsentlüftungsventil
- 18: Rückschlagventil
- 19: Überlaufbehälter

## Patentansprüche

1. Kraftstofftank (1) für ein Kfz, bei welchem wenigstens zwei Tankbereiche (2,3) mit größerem Querschnitt jeweils kommunizierende Teilvolumina des Tanks bildend über einen Tankbereich kleineren Querschnitts (4) miteinander verbunden sind, wobei der Tankbereich kleineren Querschnitts (4) in Einbaulage des Tanks eine untere Einziehung desselben bildet, mit wenigstens einer in einem ersten Tankbereich (2) vorgesehenen Kraftstofffördereinheit (8) und mit Mitteln zur Entlüftung des Tanks, wobei wenigstens eine Ausgleichsleitung (10) vorgesehen ist, die die Teilvolumina der Tankbereiche (2,3) größeren Querschnitts nach dem Prinzip der kommunizierenden Röhren miteinander verbindet und wobei Mittel zur Entlüftung der Ausgleichsleitung (10) vorgesehen sind, **dadurch gekennzeichnet, dass** als Mittel zur Entlüftung des Tanks nur ein einziges gemeinsames Betankungsentlüftungsventil (17) für die Teilvolumina des Tanks vorgesehen ist, welches in einem zweiten Tankbereich (3) größeren Querschnitts angeordnet ist, dass die Ausgleichsleitung (10) mit einem ersten Ende (16) in den ersten Tankbereich (2) größeren Querschnitts auf einem höheren Niveau mündet als in dem zweiten Tankbereich (3) größeren Querschnitts und dass in dem ersten Ende (16) der Ausgleichsleitung (10) ein Rückschlagventil (18) vorgesehen ist, so dass ein Ausgleich der Füllstände der miteinander kommunizierenden Teilvolumina zumindest bei niedrigem Füllstandsniveau nur bei einem solchen Niveaugefälle möglich ist, bei dem der Füllstand in dem ersten Tankbereich (2), in welchem die Kraftstofffördereinheit angeordnet ist, niedriger ist als in den anderen Tankbereichen (3) des Tanks.

2. Kraftstofftank nach Anspruch 1, bei welchem wenigstens zwei Tankbereiche (2,3) mit größerem Querschnitt jeweils kommunizierende Teilvolumina des Tanks bildend über einen Tankbereich kleineren Querschnitts (4) miteinander verbunden sind, wobei der Tankbereich kleineren Querschnitts (4) in Einbaulage des Tanks eine untere Einziehung desselben bildet, mit wenigstens einer in einem ersten Tankbereich (2) vorgesehenen Kraftstofffördereinheit (8) und mit Mitteln zur Entlüftung des Tanks, wobei wenigstens eine Ausgleichsleitung (10) vorgesehen ist, die die Teilvolumina der Tankbereiche (2,3) größeren Querschnitts nach dem Prinzip der kommunizierenden Röhren miteinander verbindet und wobei Mittel zur Entlüftung der Ausgleichsleitung (10) vorgesehen sind, **dadurch gekennzeichnet, dass** als Mittel zur Entlüftung des Tanks nur ein einziges gemeinsames Betankungsentlüftungsventil (17) für die Teilvolumina des Tanks vorgesehen ist, welches in einem zweiten Tankbereich (3) größeren Querschnitts angeordnet ist, dass die Ausgleichsleitung (10) mit einem ersten Ende (16) in den ersten Tankbereich (2) größeren Querschnitts auf einem höheren Niveau mündet als in dem zweiten Tankbereich größeren Querschnitts und dass das erste Ende (16) der Ausgleichsleitung (10) in einen dieses Ende aufnehmenden Oberlaurbehalter (19) mündet, so dass ein Ausgleich der Füllstände der miteinander kommunizierenden Teilvolumina zumindest bei niedrigem Füllstandsniveau nur bei einem solchen Niveaugefälle möglich ist, bei dem der Füllstand in dem ersten Tankbereich (2), in welchem die Kraftstofffördereinheit angeordnet ist, niedriger ist als in den anderen Tankbereichen (3) des Tanks.

3. Kraftstofftank nach einem der Ansprüche 1 oder 2, **dadurch gekennzeichnet, dass** die Ausgleichsleitung (10) über einen Abzweig an eine Unterdruckleitung (11) angeschlossen ist.

4. Kraftstofftank nach einem der Ansprüche 1 bis 3, **dadurch gekennzeichnet, dass** die Unterdruckleitung (11) an eine Pumpe angeschlossen ist, die über einen aus dem Kraftstoffförderstrom oder einen Kraftstoffrücklauf abgezweigten Kraftstoffteilstrom betrieben wird.

5. Kraftstofftank nach einem der Ansprüche 1 bis 4, **dadurch gekennzeichnet, dass** in der Unterdruckleitung (11) ein Rückschlagventil (15) vorgesehen ist.

6. Kraftstofftank nach einem der Ansprüche 1 bis 5, **dadurch gekennzeichnet, dass** der Tankbereich (4) kleineren Querschnitts oberhalb des durch das Betankungsentlüftungsventil (17) vorgegebenen maximalen Füllstandsniveaus der Tankbereiche (2,3) größeren Querschnitts angeordnet ist.

## Claims

1. A fuel tank (1) for a motor vehicle in which at least two tank regions (2, 3) of larger cross-section forming respective communicating sub-volumes of the tank are connected together by way of a tank region (4) of smaller cross-section, wherein the tank region (4) of smaller cross-section in the position of installation of the tank forms a lower inward constriction thereof, with at least one fuel delivery unit (8) provided in a first tank region (2), and with means for venting the tank, wherein there is provided at least one compensating line (10) which interconnects the sub-volumes of the tank regions (2, 3) of larger cross-section on the principle of communicating tubes, and wherein there are provided means for venting the compensating line (10), **characterised in that** the means for venting the tank is only a single common refuelling vent valve (17) for the sub-volumes of the tank, which is arranged in a second tank region (3) of larger cross-section, that the compensating line (10) opens with a first end (16) into the first tank region (2) of larger cross-section at a higher level than in the second tank region (3) of larger cross-section and that a check valve (18) is provided in the first end (16) of the compensating line (10) so that equalisation of the filling levels of the intercommunicating sub-volumes is possible at least at a low filling level only in the event of such a fall in level at which the filling level in the first tank region (12) in which the fuel delivery unit is arranged is less than in the other tank regions (3) of the tank.

2. A fuel tank according to claim 1 for a motor vehicle in which at least two tank regions (2, 3) of larger cross-section forming respective communicating sub-volumes of the tank are connected together by way of a tank region (4) of smaller cross-section, wherein the tank region (4) of smaller cross-section in the position of installation of the tank forms a lower inward constriction thereof, with at least one fuel delivery unit (8) provided in a first tank region (2), and with means for venting the tank, wherein there is provided at least one compensating line (10) which interconnects the sub-volumes of the tank regions (2, 3) of larger cross-section on the principle of communicating tubes, and wherein there are provided means for venting the compensating line (10), **characterised in that** the means for venting the tank is only a single common refuelling vent valve (17) for the sub-volumes of the tank, which is arranged in a second tank region (3) of larger cross-section, that the compensating line (10) opens with a first end (16) into the first tank region (2) of larger cross-section at a higher level than in the second tank region (3) of larger cross-section and that the first end (16) of the compensating line (10) opens into an overflow container (19) receiving said end so that equalisation of the filling levels of the intercommunicating sub-volumes is possible at least at a low filling level only in the event of such a fall in level at which the filling level in the first tank region (2) in which the fuel delivery unit is arranged is less than in the other tank regions (3) of the tank.

3. A fuel tank according to one of claims 1 and 2 **characterised in that** the compensating line (10) is connected by way of a branch to a reduced-pressure line (11).

4. A fuel tank according to one of claims 1 to 3 **characterised in that** the reduced-pressure line (11) is connected to a pump which is operated by way of a partial fuel flow branched from the fuel delivery flow or a fuel return flow.

5. A fuel tank according to one of claims 1 to 4 **characterised in that** there is provided a check valve (15) in the reduced-pressure line (11).

6. A fuel tank according to one of claims 1 to 5 **characterised in that** the tank region (4) of smaller cross-section is arranged above the maximum filling level of the tank regions (2, 3) of larger cross-section, said maximum filling level being predetermined by the refuelling vent valve (17).

## Revendications

1. Réservoir de carburant (1) pour un véhicule automobile, dans lequel au moins deux zones de réservoir (2, 3), de section transversale plus grande, formant des volumes partiels et communiquant respectivement, du réservoir, sont reliées ensemble par l'intermédiaire d'une zone de réservoir de section transversale plus petite (4), sachant que la zone de réservoir de section transversale plus petite (4) forme, le réservoir en position de montage, un renfoncement dans sa partie inférieure, avec au moins une unité d'alimentation en carburant (8) prévue dans une première zone de réservoir (2), et avec des moyens pour évacuer l'air du réservoir, sachant qu'il est prévu au moins une conduite de compensation (10) qui relie ensemble les volumes partiels des zones de réservoir (2, 3) de section transversale plus grande selon le principe des tuyaux communicants et sachant qu'il est prévu des moyens pour évacuer l'air de la conduite de compensation (10), **caractérisé en ce qu'**il n'est prévu, en tant que moyen pour évacuer l'air du réservoir, qu'une seule purge d'air de ravitaillement commune (17) pour les volumes partiels du réservoir, laquelle est disposée dans une deuxième zone de réservoir (3) de section transversale plus grande, **en ce que** la conduite de compensation (10) débouche avec une première extrémité (16) dans la première zone de réservoir (2) de section transversale plus grande sur un niveau plus élevé que dans la deuxième zone de réservoir (3) de section transversale plus grande et **en ce que** dans la première extrémité (16) de la conduite, de compensation (10), il est prévu un clapet anti-retour (18), de sorte qu'au moins en cas de faible niveau de remplissage, une compensation des niveaux de remplissage des volumes partiels communiquant ensemble n'est possible qu'en présence d'une baisse de niveau telle, que le niveau dans la première zone de réservoir (2), dans laquelle l'unité d'alimentation en carburant (8) est disposée, est plus bas que celui dans l'autre zone de réservoir (3) du réservoir.

2. Réservoir de carburant selon la revendication 1, dans lequel au moins deux zones de réservoir (2, 3), de section transversale plus grande, formant des volumes partiels et communiquant respectivement, du réservoir, sont reliées ensemble par l'intermédiaire d'une zone de réservoir de section transversale plus petite (4), sachant que la zone de réservoir de section transversale plus petite (4) forme, le réservoir en position de montage, un renfoncement dans sa partie inférieure, avec au moins une unité d'alimentation en carburant (8) prévue dans une première zone de réservoir (2), et avec des moyens pour évacuer l'air du réservoir, sachant qu'il est prévu au moins une conduite de compensation (10) qui relie ensemble les volumes partiels des zones de réservoir (2, 3) de section transversale plus grande selon le principe des tuyaux communicants et sachant qu'il est prévu des moyens pour évacuer l'air de la conduite de compensation (10), **caractérisé en ce qu'**il n'est prévu, en tant que moyen pour évacuer l'air du réservoir, qu'une seule purge d'air de ravitaillement commune (17) pour les volumes partiels du réservoir laquelle est disposée dans une deuxième zone de réservoir (3) de section transversale plus grande, **en ce que** la conduite de compensation (10) débouche avec une première extrémité (16) dans la première zone de réservoir (2) de section transversale plus grande sur un niveau plus élevé que dans la deuxième zone de réservoir de section transversale plus grande et **en ce que** la première extrémité (16) de la conduite de compensation (10) débouche dans un récipient de trop-plein (19) recevant cette extrémité, de sorte qu'au moins en cas de faible niveau de remplissage, une compensation des niveaux de remplissage des volumes partiels communiquant ensemble n'est possible qu'en présence d'une baisse de niveau telle, que le niveau dans la première zone de réservoir (2), dans laquelle l'unité d'alimentation en carburant est disposée, est plus bas que celui dans l'autre zone de réservoir (3) du réservoir.

3. Réservoir de carburant selon l'une quelconque des revendications 1 ou 2, **caractérisé en ce que** la conduite de compensation (10) est raccordée par le biais d'une dérivation à une conduite à dépression (11).

4. Réservoir de carburant selon l'une quelconque des revendications 1 à 3, **caractérisé en ce que** la conduite à dépression (11) est reliée à une pompe qui est actionnée par le biais d'un flux partiel de carburant dévié du débit de carburant ou d'un retour de carburant.

5. Réservoir de carburant selon l'une quelconque des revendications 1 à 4, **caractérisé en ce qu'**il est prévu un clapet anti-retour (15) dans la conduite à dépression (11).

6. Réservoir de carburant selon l'une quelconque des revendications 1 à 5, **caractérisé en ce que** la zone de réservoir (4) d'une section transversale plus petite est disposée au-dessus du niveau de remplissage maximal, prédéfini par la purge d'air de ravitaillement (17), des zones de réservoir (2, 3) de section transversale plus grande.
